# EUROPEAN PATENT APPLICATION

(11) **EP 4 681 893 A1**
(43) Date of publication of application: **21.01.2026**
(21) Application number: 24188888.2
(22) Date of filing: 16.07.2024
(51) Int. Cl.: B25J 15/06, F04F 5/20

(54) **END-OF-ARM SUCTION GRIPPER ARRANGEMENT HAVING A PASSIVE RELEASE VALVE**

(71) Applicant: Piab Aktiebolag, 182 12 Danderyd (SE)
(72) Inventor: WIGREN, Gustaf, 185 34 VAXHOLM (SE)
(74) Representative: Brann AB

(57) **Abstract**

An end-of-arm tool comprising a suction gripper arrangement comprising a vacuum source, a suction gripper, a passive valve configured to allow for entry of ambient air into the suction gripper via the passive valve when a pressure inside the suction gripper is above an operating pressure is disclosed.

## Description

### FIELD OF THE INVENTION

The present invention relates to an end-of-arm tool, and more particularly and an end-of-arm suction gripper arrangement comprising a vacuum source, a suction gripper, and a passive valve configured to allow for entry of ambient air into the suction gripper via the passive valve when a pressure inside the suction gripper is above an operating pressure.

### BACKGROUND ART

Atmospheric release in automated suction gripper object handling applications can be troublesome due to that an atmospheric release function is typically slow compared to a positive pressure release function (commonly known as Blow-Off).

For systems with compressed air available, valves that open to atmosphere for release of a gripped object can be piloted by compressed air and thereby be made compact with minimal electrical energy used for actuation of a large valve-orifice. However, with the recent trend of miniaturized electrically driven vacuum-sources for automation handling applications, a supply or source of pressurized air will typically not be available, and may not be desirable.

When using an electrically driven vacuum source, in order to enhance the atmospheric release function, an electrically operated valve with a larger orifice could be used. With a larger orifice, however, an associated electrical valve will become increasingly bulky and heavy, and a larger electrically operated valve will moreover generate a substantial amount of heat.

Additionally, as the pressure inside the suction gripper approaches atmospheric pressure, the flow through the valve orifice will decrease exponentially since the flow-cross-sectional area of the orifice is constant and the pressure-difference driving the flow through the orifice decreases, thereby extending the gripping operation release-time. Moreover, upon opening of the release valve to ambient air, the suction cup will expand from its compressed state, and the volume to evacuate will therefore increase, thereby increasing the release-time significantly, due to the associated increase in the volume to be evacuated. Especially when the suction gripper comprises one or more bellows.

Accordingly, it would be desirable to provide for efficient atmospheric release while avoiding the drawbacks associated with a larger electrical valve.

### SUMMARY OF THE INVENTION

According to the present invention, the above object has been achieved by a passive valve being configured to passively open to ambient air when a pressure inside the suction gripper is above an operating pressure.

Accordingly, in one aspect the invention relates to an end-of-arm suction gripper arrangement **10** for gripping objects **100,** said arrangement comprising: a vacuum source **20;** a suction gripper **30** fluidly connected to the vacuum source; and, a first valve **40** when in an open state fluidly connecting the suction gripper **30** to ambient air **50** via the valve, the first valve being configured to be in an open state or in a closed state upon actuation thereof, thereby allowing for entry of ambient air into the suction gripper via the first valve when in an open state, wherein the suction gripper arrangement additionally comprises a second, passive, valve **60** when in an open state fluidly connecting the suction gripper **30** to ambient air **50,** said second, passive, valve being configured to be in an open state in a relaxed condition thereof, and passively open to ambient air when a pressure inside the suction gripper **30** is above an operating pressure, thereby allowing for entry of ambient air into the suction gripper **30** via the second, passive, valve **60** when in an open state.

In some instances, the inventive passive valve **60** could be used as the sole release valve, while omitting a first actuated release valve. For example, when objects having a leaking surface, such as cardboard, are being handled, it is conceived that the inventive passive valve **60** in many instances will be sufficient to significantly reduce the release time.

Accordingly, in another aspect the present invention relates to an end-of-arm suction gripper arrangement **10** for gripping objects **100,** said arrangement comprising: a vacuum source **20;** a suction gripper **30** fluidly connected to the vacuum source; and, a valve **60** when in an open state fluidly connecting the suction gripper **30** to ambient air **50,** wherein the valve **60** is a passive valve being configured to be in an open state in a relaxed condition thereof, and passively open to ambient air when a pressure inside the suction gripper **30** is above a gripper operating pressure, thereby allowing for entry of ambient air into the suction gripper **30** via the passive valve **60** when in an open state.

According to the invention, the passive valve **60** could be used with any source of vacuum **20.**

In preferred embodiments of the invention including a first valve **40** in addition to a second, passive, valve **60,** the second, passive, valve **60** could principally be used with any type of first valve **40,** as long as the first valve **40** allows for controlling a desired entry of air into a suction gripper through the valve **40.**

In preferred embodiments, the inventive solution combines the use of a first valve **40,** which can be made relatively small, with a second, passive, valve **60** that opens towards atmosphere as the pressure-difference to atmosphere decreases, thereby speeding up the release process.

Accordingly, the invention will boost the flow-capacity of an atmospheric release valve system for handling application within automation industry. This may be of a great importance to the overall efficacy of the handling system, especially since the release step may be the efficiency limiting step of a gripping operation.

Especially when the suction gripper comprises one or more bellows, the inventive passive valve 60 will have a significant contribution in reducing the release-time, as such bellows typically expand from a fully collapsed state in a vacuum-range between -20 kPa and atmospheric pressure, thereby increasing the volume to be equalized.

The inventive passive valve can be made small, simple, and light-weight. Moreover, the inventive valve **60** is passive and does accordingly not require supply of energy.

Further embodiments and advantages of the invention will be apparent from the following detailed description and appended claims.

The term "a pressure above operating pressure" is intended to refer to a lower level of vacuum than an operating level of vacuum.

As used herein the term "suction gripper" is intended to generally refer to a suction cup or to an array of suction cups, a suction pad or to an array of suction pads.

The term "atmospheric" as used herein is intended to refer to ambient conditions, typically ambient air and ambient pressure.

The first valve **40** and passive valve **60,** respectively, of the claimed invention could also be referred to as release valves or vacuum release valves, since both valves are used to release a vacuum level inside the gripper by entry through the valves of ambient air into the gripper.

The term "second, passive, valve **60"** is used herein to refer to passive valve **60** in embodiments of the invention additionally including a first valve **40.** The term "passive valve **60"** has been used herein to refer to passive valve **60** in any embodiment, unless otherwise indicated.

### BRIEF DESCRIPTION OF THE ATTACHED DRAWINGS

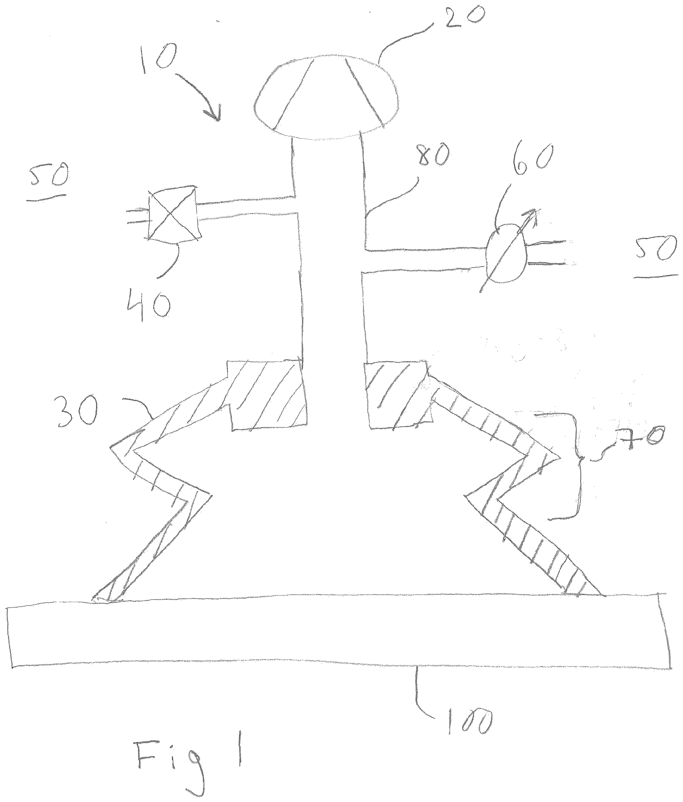

Figure 1 shows a schematic overview of an embodiment of the inventive end-of-arm suction gripper arrangement **10** including both a first valve **40,** and a second, passive, valve **60.**
Figure 2 shows a detailed view of an embodiment of a passive valve **60.**
Figure 3 illustrates an example of a combined release flow ("Total flow") according to the invention, and the respective two flows through the two valves **40** and **60;** "Valve flow" indicates the flow through an electrical valve **40,** and "Booster flow" indicates the flow through a second, passive, valve **60.**
Figure 4 illustrates for purposes of comparison the corresponding release time for an embodiment of the invention ("Combined system release time") including both a first valve **40** and a second, passive, valve **60,** and the corresponding release time for a comparative system using only an electrical solenoid valve ("Valve release time").

### DETAILED DESCRIPTION OF THE INVENTION

The present inventor has found that a passive valve, such as the valve disclosed in EP 2 641 854, can be used for letting in ambient air to a suction gripper during release when the pressure inside the gripper is above an operating pressure, thereby enhancing the flow of ambient air into the gripper during the remaining release process. The valve orifice of the passive valve disclosed in EP 2 641 854 will gradually open to ambient air as the pressure difference between ambient air and the inside of the gripper decreases, i.e. as the pressure inside the suction gripper approaches ambient pressure.

As opposed to the valve disclosed in EP 2 641 854, however, the passive valve used in the present invention is not positioned in the evacuation flow path of the gripper, since it is used for a different purpose and accordingly must be fluidly connected to ambient air also during gripping of an object using the suction gripper. Also, the inventive passive valve 60 is not required to open gradually to ambient air as the pressure difference between ambient air and the inside of the gripper decreases, but can open abruptly as well as gradually.

The passive valve **60** as used in the present invention is in an open state in its normal, relaxed, resting condition. As the suction gripper **30** is being evacuated by operation of the vacuum source **20,** the pressure inside the suction gripper decreases, and a flow of ambient air **50** into the arrangement through the orifice **63** will increase. As the flow of ambient air through the orifice **63** of the passive valve increases and the pressure inside the arrangement decreases, the sealing member **65** of valve **60** will eventually be moved towards the orifice **63** into a position wherein the sealing member **65** seals the valve orifice **63** from ambient air **50.** Once the valve orifice **63** has been closed by the sealing member **65,** a lower desired operating pressure inside the gripping arrangement can be achieved. The valve orifice will remain closed until a pressure below operating pressure is reached inside the gripping arrangement, such as by opening of the first valve **40** to ambient air, or by mere leaking of air into the suction gripper **30** due to a leaking surface of an object **100.**

In embodiments including a first valve **40,** the design of the first valve **40** is not critical to the invention as long as the first valve can be controlled to be in an open state when desired. Accordingly, the first valve could be configured to be open when in a relaxed state and actuated so as to be in a closed state, or vice versa. Alternatively, the first valve could be bistable, and require actuation for both states. The first valve could either be piloted by compressed air, or directly operated electrically.

In preferred embodiments, the vacuum source **20** of the inventive gripper arrangement **10** is electrically powered. In such embodiments the electrical vacuum source **20** of the gripper arrangement **10** can typically be a vacuum pump, such as a piston pump or a membrane pump.

In preferred embodiments, the first valve **40,** when included, is electrically operated. In such embodiments the electrically operated first valve **40** is typically a solenoid valve.

The design of the passive valve **60** is not critical as long as the above-described intended functioning is not compromised.

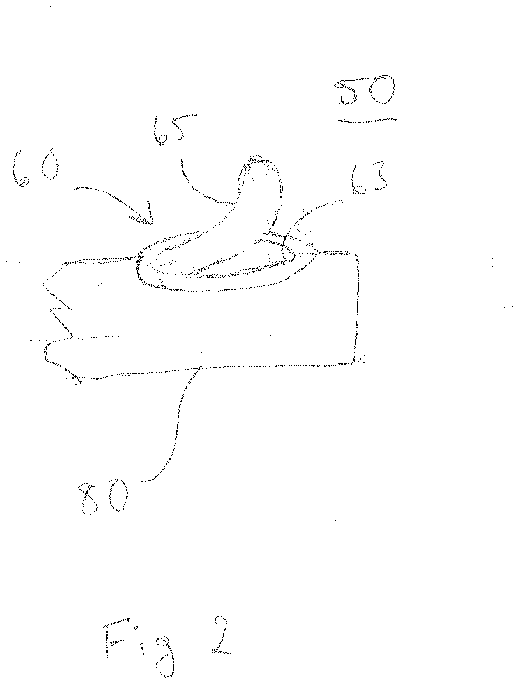

In a preferred embodiment, such as shown in **Fig. 2****,** the passive valve **60** is made up by a surface with an orifice **63,** which is gradually closed off by a flexible sealing member **65,** which is gradually brought closer to the orifice **63** by flexing of the flexible sealing member **65** as a flow through the orifice **63** increases and the pressure inside the gripper decreases. The speed of the air flow in the space between the orifice and the flexible sealing material of sealing member **65** increases as the distance decreases, creating a lower static pressure and a higher dynamic pressure alongside the sealing surface, thereby forcing the sealing surface closer to the orifice until the orifice **63** is fully closed off.

The tension from the deformation of the sealing-material of sealing member **65** will then work against the pressure-difference between the orifice and the ambient air, and, as the internal pressure in the system increases, e.g. as the first valve **40** is opened, once a critical pressure difference is reached between ambient air and the pressure inside the gripper system, the valve **60** will open allowing for additional flow of ambient air into the system.

The sealing member **65** will typically take the form of a flap. In preferred embodiments the sealing material is flexible so as to allow for a gradual occlusion of the valve orifice by flexing of the sealing material of the sealing member **65** towards the valve orifice **63** with an increased drag on the sealing member. The flexible material of the sealing member **65** will typically be a polymeric material.

Other designs of the passive valve **60** could also be used according to the invention, such as a spring-loaded flap in a hinge, a ball-valve which could be either spring-loaded or rely merely on gravity. However, designs which rely on or are sensitive to the force of gravity are generally less preferred, since the valve for a proper intended function in such instances will have to be suitably oriented in relation to the direction of the force of gravity.

When an object **100** is to be gripped using the inventive gripper arrangement **10,** the vacuum source **20** is active and the first valve **40,** when included, is in its closed position while the suction gripper **30,** such as a suction-cup, is placed against the object, and air is evacuated from the gripper. When the object is to be released, the vacuum source **20** is deactivated and the first valve **40,** when included, is opened to ambient air.

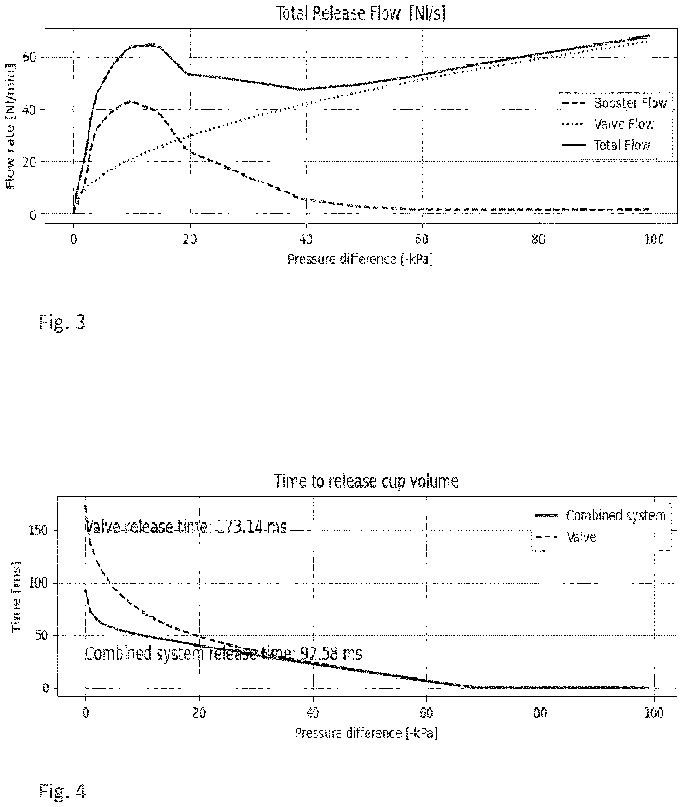

In embodiments including an electrical valve **40,** the inflow of air through the electrical valve **40** in its open stage is typically acceptable in the initial stages of the release, but decreases according the "Valve-flow" graph as illustrated in **Fig. 3** as the pressure-difference to the ambient air decreases and the cross-sectional area of the valve-orifice is fixed.

By virtue of a second, passive, valve **60** of the inventive arrangement **10** having a performance-characteristic according to the "Booster Flow" graph as illustrated in **Fig. 3****,** the combined airflow through the two valves **40** and **60** will significantly increase the volume flow during the critical final stages of the release (typically between 20 -kPa and 0 -kPa), thereby shortening the release time, as can be seen in **Fig 4****.** Generally, when using solely a release valve **40** which opens to atmosphere, such as in the prior art, the lower the weight of an engaged object **100,** the longer the release time, especially for an object having a non-leaking surface. Accordingly, the invention may reduce the release time substantially in such instances.

The inventive passive valve **60** shall preferably be tailored to have a characteristic matching a typical suction cup **30** behaviour with respect to cup-volume vs. pressure during the suction cup collapse/expansion phase.

By combining the natural effect of how the suction-cup volume changes with pressure with the engineered characteristic of the flow-actuated valve, release-flow can be tailored towards the suction-cup characteristics.

During the evacuation phase of the handling process, the flow from the vacuum source **20** must exceed the Booster-flow (such as shown in **Fig. 3**) in order to be able to close the passive valve **60** and allow for the system **10** to reach desired deep operating vacuum levels.

The cross-sectional area of the orifice **63** of the passive valve **60** can be designed in various sizes to suit different applications. With a smaller orifice **63,** the required size of a given vacuum source **20** for closing the orifice **63** would be smaller, but with an impaired performance in the release-phase.

The invention allows for ambient release of handled objects with markedly improved speed of release, as can be seen in **Fig. 4****,** while maintaining lightweight solutions with limited power-consumption, especially as compared to traditional large electrical release valves of the prior art.

The invention will reduce the energy need, minimize weight of tooling, and improve the productivity of automated handling applications.

### LIST OF REFERENCE NUMERALS USED

- 10: end-of-arm suction gripper arrangement
- 20: vacuum source
- 30: suction gripper
- 40: first valve (when included)
- 50: ambient air
- 60: passive valve
- 63: valve orifice
- 65: sealing member
- 70: bellows
- 80: vacuum conduit
- 100: object to be gripped

## Claims

1. An end-of-arm suction gripper arrangement (10) for gripping objects (100), said arrangement comprising:
- a vacuum source (20);
- a suction gripper (30) fluidly connected to the vacuum source; and,
- a valve (60) when in an open state fluidly connecting the suction gripper (30) to ambient air (50),
**characterized in**
**that** the valve (60) is a passive valve being configured to be in an open state in a relaxed condition thereof, and passively open to ambient air when a pressure inside the suction gripper (30) is above a gripper operating pressure, thereby allowing for entry of ambient air into the suction gripper (30) via the passive valve (60) when in an open state.

2. An end-of-arm suction gripper arrangement (10) for gripping objects (100), said arrangement comprising:
- a vacuum source (20);
- a suction gripper (30) fluidly connected to the vacuum source; and,
- a first valve (40) when in an open state fluidly connecting the suction gripper (30) to ambient air (50) via the valve, the first valve being configured to be in an open state or in a closed state upon actuation thereof, thereby allowing for entry of ambient air into the suction gripper (30) via the first valve (40) when in an open state,
**characterized in**
additionally comprising a second, passive, valve (60) when in an open state fluidly connecting the suction gripper (30) to ambient air (50), said second, passive, valve being configured to be in an open state in a relaxed condition thereof, and passively open to ambient air when a pressure inside the suction gripper (30) is above a gripper operating pressure, thereby allowing for entry of ambient air into the suction gripper (30) via the second, passive, valve (60) when in an open state.

3. The end-of-arm suction gripper arrangement (10) for gripping objects of claim 2, wherein the first valve (40) is configured to be in an open state upon actuation thereof.

4. The end-of-arm suction gripper arrangement (10) for gripping objects of claim 2 or 3, wherein the first valve (40) is electrically operated.

5. The end-of-arm suction gripper arrangement (10) for gripping objects of any one of claims 2-4, wherein the first valve (40) is a solenoid valve.

6. Then end-of-arm suction gripper arrangement (10) for gripping objects of any one of the previous claims, wherein the suction gripper (30) comprises one or more bellows (70).

7. The end-of-arm suction gripper arrangement (10) for gripping objects of any one of the preceding claims, additionally comprising a vacuum conduit (80) fluidly connecting the vacuum source (20) and the suction gripper (30), wherein the passive valve (60) is displaced along the vacuum conduit and opens into the vacuum conduit.

8. The end-of-arm suction gripper arrangement (10) for gripping objects of any one of the preceding claims, wherein the passive valve (60) is located adjacent to the vacuum source (20).

9. The end-of-arm suction gripper arrangement (10) for gripping objects of any one of the preceding claims, wherein the passive valve (60) comprises a flexible sealing member (65) configured to close a valve orifice (63) of the passive valve (60) upon flexing of the flexible sealing member (65) in a direction towards the valve orifice (63).

10. The end-of-arm suction gripper arrangement (10) for gripping objects of any one of the preceding claims, wherein the vacuum source (20) is an electrically powered vacuum pump.

11. The end-of-arm suction gripper arrangement (10) for gripping objects of claim 10, wherein the vacuum pump (20) is a piston pump or a membrane pump.
